(19) Europäisches Patentamt
European Patent Office
Office européen des brevets

(11) Veröffentlichungsnummer: 0 161 615
B1

(12) # EUROPÄISCHE PATENTSCHRIFT

(45) Veröffentlichungstag der Patentschrifft: **17.01.90**

(51) Int. Cl.[4]: **H 02 P 7/62**

(21) Anmeldenummer: **85105520.2**

(22) Anmeldetag: **06.05.85**

(54) **Verfahren und Vorrichtung zum Bestimmen des Flussvektors einer Drehfeldmaschine.**

(30) Priorität: **18.05.84 DE 3418640**

(43) Veröffentlichungstag der Anmeldung: **21.11.85 Patentblatt 85/47**

(45) Bekanntmachung des Hinweises auf die Patenterteilung: **17.01.90 Patentblatt 90/03**

(84) Bennante Vertragsstaaten: **AT BE CH DE FR GB IT LI LU NL SE**

(56) Entgegenhaltungen: **DE-A-2 106 789**

(73) Patentinhaber: **Siemens Aktiengesellschaft**
**Wittelsbacherplatz 2**
**D-8000 München 2 (DE)**

(72) Erfinder: **Blaschke, Felix, Dr.**
**Steinforststrasse 19**
**D-8520 Erlangen (DE)**

**EP 0 161 615 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft ein Verfahren zum Bestimmen des Flußvektors einer Drehfeldmaschine mit den Merkmalen des Oberbegriffes des Anspruchs 1. Die Erfindung betrifft ferner eine Vorrichtung zur Durchführung des Verfahrens sowie deren Anwendung.

Ein derartiges Verfahren ist bei der Vorrichtung nach der deutschen Offenlegungsschrift 3 026 202 für den feldorientierten Betrieb einer umrichtergespeisten Drehfeldmaschine verwendet. Bei der Feldorientierung wird die Lage des Flußvektors erfaßt und der die Maschine speisende Umrichter in Abhängigkeit von der Lage des Flußvektors so gesteuert, daß die zum Fluß parallele Komponente des Ständerstromes und die dazu senkrechte Ständerstromkomponente unabhängig beeinflußbar sind. Über die Steuerung der flußparallelen Ständerstromkomponente (Magnetisierungsstrom) kann ein vorgegebener Wert für den Betrag des Flusses eingestellt werden, während die zum Fluß senkrechte Stromkomponente (Wirkstrom) dann linear in das Drehmoment eingeht und unmittelbar zur entkoppelten Steuerung von Drehzahl oder Drehmoment verwendet werden kann.

Für diese Feldorientierung ist aber die Kenntnis der Flußlage erforderlich. Dabei ist es vorteilhaft, den Fluß nicht über Hallsonden direkt zu messen, sondern mittels einer Rechenmodellschaltung aus elektrischen Größen zu berechnen. Die einfachste Möglichkeit hierzu ist ein sogenanntes "Spannungsmodell", das mittels eines EMK-Detektors aus den Eingangsspannungen des Motors durch Abzug des ohmschen Ständerspannungsabfalles und der induktiven Streuspannungen die induzierte EMK bestimmt. Der Fluß ergibt sich dann als Integral der EMK.

Zur Beschreibung der Maschinenströme, Maschinenspannungen, der EMK und des Flusses können ebene Vektoren verwendet werden, die jeweils durch zwei Bestimmungsgrößen gegeben sind, z. B. ihre kartesischen oder polaren Komponenten bezüglich eines ruhenden (d.h. ständerorientierten oder "raumfesten") oder mit der Läuferachse rotierenden ("läuferorientierten") oder der Feldachse rotierenden ("feldorientierten") Koordinatensystems. Für das erwähnte "Spannungsmodell" ist die Betrachtung im ständerorientierten kartesischen Koordinatensystem am einfachsten, da es hierzu lediglich erforderlich ist, z. B. bei einer dreiphasigen Maschine aus den Spannungen und Strömen der drei um 120° gegeneinander versetzten Phasen mittels eines "3/2"-Koordinatenwandlers die entsprechenden kartesischen, raumfesten Komponenten (diese sind hier mit den Indizes s1 und s2 gekennzeichnet) des entsprechenden Ständerstromvektors $\underline{i}$ und des Ständerspannungsvektors $\underline{u}$ zu bilden, wobei sich der Vektor $\underline{e}$ der EMK dann unter Berücksichtigung des Ständerwiderstandes $r^s$ und der Streuinduktivität $l^\sigma$ durch komponentenweise Addition gemäß $\underline{e} = \underline{u} - r^s \cdot \underline{i} - l^\sigma \cdot d\underline{i}/dt$ errechnet. Die kartesischen ständerorientierten Komponenten des Flußvektors $\underline{\Psi}$ ergeben sich dann jeweils als Integral der entsprechenden Komponente des EMK-Vektors.

Die für diese Integration erforderlichen offenen Integratoren neigen zum Wegdriften und müssen stabilisiert werden, z. B. über einen in einer Rückführungsleitung des Integrators liegenden Nullpunktregler. Diese Nullpunktregler bilden also aus der Regelabweichung der in den Flußkomponenten enthaltenen Gleichanteile jeweils ein Rückführungssignal, aus dem durch Subtraktion von den raumfesten EMK-Komponenten die Ausgangsgröße für die anschließende, zu den Flußkomponenten führende Integration gebildet werden.

Mit der Nullpunktdrift der Integration werden jedoch bei niedrigen Betriebsfrequenzen auch die entsprechend langsamen Änderungen der Flußkomponenten unterdrückt. Außerdem entsteht im stationären Betrieb ein Winkelfehler, der sich ebenfalls vor allem bei niedrigen Frequenzen auswirkt und zu einer störenden Fehlorientierung führt, wenn die Sollwerte für den Ständerstrom feldorientiert vorgegeben werden. Diesen Nachteilen steht jedoch die gute Dynamik dieses Spannungsmodells gegenüber.

Es ist aber auch möglich, einen Modellwert für den Maschinenfluß aus den Maschinenströmen (d.h. dem Ständerstromvektor $\underline{i}$ und im Fall einer Synchronmaschine auch dem Erregerstrom $i^e$) und der gemessenen Läuferstellung oder, was meßtechnisch häufig vorteilhaft ist, aus der Läuferdrehzahl $\lambda$, zu ermitteln. Dieses "Strommodell" bildet die in der Maschine auftretenden Vorgänge, soweit sie zur Ausbildung des Flusses führen, elektronisch nach. Für dieses Strommodell ist die Verwendung eines feldorientierten Koordinatensystems vorteilhaft, wobei die zum Feld parallele Komponente mit dem Index $\varphi 1$ und die dazu senkrechte Komponente mit dem Index $\varphi 2$ bezeichnet wird. Die Umrechnung von einem Koordinatensystem in ein anderes, um einen vorgegebenen Winkel gedrehtes Koordinatensystem geschieht dadurch, daß die entsprechenden Komponenten des zu transformierenden Vektors einem sogenannten "Vektordreher" zugeführt werden, an dessen Winkeleingang ein entsprechendes Winkelsignal, z. B. Sinus und Cosinus des Drehwinkels, angelegt werden.

Beim Strommodell müssen möglichst genaue Modellparameter für die Maschinenparameter eingestellt werden, so daß z. B. temperaturbedingte Änderungen des Läuferwiderstandes sowohl bei stationären wie bei dynamischen Vorgängen zu Verfälschungen des Modellflusses führen. Für höhere Betriebsfrequenzen ist daher das Spannungsmodell vorzuziehen, bei niedrigen Betriebsfrequenzen führt jedoch das Strommodell trotz möglicher stationärer Ungenauigkeiten zu einem besseren Modellwert für den Fluß.

In der erwähnten deutschen Offenlegungsschrift 3 026 202 ist daher eine Kombination beider Modelle vorgesehen. Entsprechend dem Spannungsmodell werden aus den Maschinenströmen und Maschinenspannungen zwei Komponenten eines dem Spannungsmodell zugeordneten Modell-EMK-Vektors gebildet, aus denen dann die entsprechenden Komponenten des diesem Spannungsmodell zugeordneten Flußvektors als Führungsvektor $\underline{\Psi}^*$ für die Nullpunktregler gebildet werden. Die Schaltung arbeitet hierbei ständerorientiert und enthält für die Bildung des Flusses je einen Integrator für jede kartesische EMK-Komponente. Dadurch wird erreicht, daß das Spannungsmodell zumindest hinsichtlich seines stationären Verhaltens dem Strommodell nachgeführt wird, so daß die gute Dynamik des Spannungsmodells beibehalten, jedoch die bei niedrigen Frequenzen bessere stationäre Flußbestimmung des Strommodells ausgenutzt wird.

Die Ausgänge der Integratoren und der Korrekturregler stellen jeweils die kartesischen ständerorientierten Komponenten eines umlaufenden Vektors dar, sie müssen also ständig Wechselgrößen verarbeiten, was nicht nur bei hohen Betriebsfrequenzen nachteilig sein kann und insbesondere bei einer Digitalisierung eine hohe Rechengeschwindigkeit erfordert.

Soll z. B. ein Phasenfehler von 1° bei der Flußbestimmung nicht überschritten werden, so dürfen die Verarbeitungsglieder insgesamt keine größeren Trägheiten als etwa 20 µs aufweisen. Dies erscheint nur in Analogtechnik mit linearen Bauteilen leicht realisierbar. Bereits Vektordreher und andere Bauteile, die mit Pulsbreitenmultiplikation arbeiten und selbst Glättungen mit Zeitkonstanten von z. B. 400 µs vornehmen, erzeugen aber Phasenfehler, die bei einer hochdynamischen Regelung der Drehfeldmaschine in zusätzlichen Einrichtungen kompensiert werden müssen.

Da die heute verfügbaren Digitalrechner einen Rechentakt von einigen 100 µs aufweisen, erscheinen die damit verbundenen Verzögerungen eine Digitalisierung derartiger Verfahren nicht zuzulassen.

Der Erfindung liegt daher die Aufgabe zugrunde, eine andere Möglichkeit zum Ermitteln von Bezugsgrößen des Flußvektors einer Drehfeldmaschine zu schaffen.

Diese Aufgabe wird gemäß der Erfindung gelöst durch ein Verfahren mit den Merkmalen des Anspruchs 1 bzw. durch eine Vorrichtung mit den Merkmalen des Anspruchs 9. Eine vorteilhafte Anwendung des Verfahrens ist im Anspruch 8 angegeben. Die abhängigen Unteransprüche betreffen vorteilhafte Weiterbildungen der Erfindung.

Anhand von 8 Figuren wird die Erfindung näher erläutert. Es zeigen:

- Fig. 1 ein erstes Ausführungsbeispiel der Erfindung und ihrer Anwendung,
- Fig. 2 eine vorteilhafte Abwandlung des EMK-Detektors in Fig. 1 und deren Berücksichtigung in der nachgeschalteten Integrationsschaltung,
- Fig. 3 eine gerätetechnische Ausführung der Integrationsschaltung,
- Fig. 4 die Ortskurve des Flußvektors bei einer Nullpunktdrift,
- Fig. 5 und
- Fig. 6 eine Darstellung eines vorteilhaften Korrekturvektors,
- Fig. 7 eine bevorzugte Kennlinie des Korrekturvektors
- Fig. 8 ein besonders vorteilhaftes zweites Ausführungsbeispiel der Erfindung.

Die Erfindung geht nun davon aus, daß die genannten Verzögerungen keine wesentlichen Verfälschungen in der Bestimmung der Phase des Flusses hervorrufen, wenn anstelle von Wechselgrößen weitgehend Gleichgrößen verwendet werden. Der durch den Flußbetrag $\Psi$ und den Flußwinkel $\varphi_s$ im ständerorientierten Bezugssystem gegebene und mit der Frequenz $\dot{\varphi}_\sigma$ umlaufende Flußvektor $\underline{\Psi}_s$ läuft nämlich in einem durch eine Frequenz $\beta$ gegenüber dem ständerorientierten Koordinatensystem rotierenden Bezugssystem nur noch mit der Differenzfrequenz $\dot{\varphi}_s - \beta$ um; die Komponenten des Flusses nehmen also in einem rotierenden Koordinatensystem umso mehr den Charakter von Gleichspannungen an, je mehr sich die Umlauffrequenz des Koordinatensystems der Flußfrequenz nähert.

Daher ist gemäß der Erfindung vorgesehen, die von der EMK zum Fluß führende Integration in einem rotierenden Bezugssystem vorzunehmen, d.h. bei der Integration nicht vom ständerorientierten EMK-Vektor $\underline{e}_s$, sondern von dem durch Transformation ins rotierende Koordinatensystem modifizierten EMK-Vektor $\underline{e}_\beta$ auszugehen.

Als besonders zweckmäßiges rotierendes Koordinatensystem hat sich ein auf den Läuferfluß orientiertes Koordinatensystem erwiesen, d.h. ein Koordinatensystem, dessen eine Koordinatenachse möglichst starr mit dem Flußvektor verbunden ist.

Ein derartiges Vorgehen erfolgt in drei Schritten. Im ersten Schritt wird der EMK-Vektor in einem Koordinatensystem ermittelt, das gegenüber der Ständerachse S1 den (mit der Frequenz $\beta$ veränderlichen) Winkel $\beta = \int \beta\, dt$ gedreht ist. Die Festlegung eines derartigen Koordinatensystems kann technisch durch einen "Vektoroszillator" geschehen. Ein derartiger Vektoroszillator kann aufgefaßt werden als ein Integrator für eine Eingangsfrequenz $\beta$, dessen Ausgangssignal $\beta$ als polare Winkelkoordinate eines Einheitsvektors mittels eines Funktionsgebers in das Winkelsignalpaar $\underline{\beta} = (\cos \beta, \sin \beta)$ umgerechnet wird, also in die ständerorientierten kartesichen Komponenten des entsprechenden Einheitsvektors.

In einem zweiten Schritt muß bei der Integration des in diesen Koordinaten gegebenen ("modifizierten") EMK-Vektors die rotatorische EMK-Komponente $\underline{e}^R{}_\beta$ berücksichtigt werden, die entsprechend dem physikalischen Zusammenhang $d\underline{\Psi}_s/dt = \underline{e}_s$ im rotierenden Bezugssystem zu der Beziehung

$$\Psi_\beta = \int (\underline{e}_\varphi + \underline{e}^R{}_\beta)dt$$

mit

$e^R_{\beta 1} = \dot{\beta} \cdot \Psi_{\varphi 2}$, $e^R_{\beta 2} = -\dot{\beta} \cdot \Psi_{\varphi 1}$

führt. Technisch bedeutet dies, daß der durch die Integration gewonnene Flußvektor in einer Rückführungsschleife einerseits mit der Frequenz $\dot{\beta}$ bewertet und andererseits um $\pi/2$ gedreht werden muß. Dieser Zusatzvektor $\underline{e}^R_\beta$ muß dann zur EMK $\underline{e}_\beta$ ab am Eingang der Integratoren addiert werden.

Schließlich muß erreicht werden, daß das Koordinatensystem möglichst phasenstarr mit dem Flußvektor rotiert. Dazu wird die Frequenz $\dot{\beta}$ des Bezugssystems der Bewegung des Flußvektors nachgeführt. Vorteilhaft wird aus dem Flußvektor eine Größe gebildet, die nur dann Null wird, wenn die Richtung des Flußvektors (Einheitsvektor $\underline{\varphi}_s$) mit der einen rotierenden Koordinatenachse zusammenfällt. Eine derartige Größe ist z. B. der Differenzwinkel $\varphi_s - \beta$ zwischen Flußachse und Koordinatenachse, eine geeignete Winkelfunktion (z. B. sin $(\varphi_s - \beta)$ dieses Winkels oder die zur Koordinatenachse $\beta_1$ senkrechte Komponente $\Psi_{\beta 2} = \Psi \cdot \sin(\varphi_s - \beta)$ des Flußvektors. Die Frequenz des Bezugssystems wird nun so nachgeregelt, daß diese Größe verschwindet. Wird also insbesondere diese Größe einem Nachführregler mit dem Sollwert Null zugeführt, so liefert dieser Regler als Ausgangsgröße die Frequenz $\dot{\beta}$ des Bezugssystems, die von dem erwähnten Vektoroszillator zur Bildung des rotierenden Bezugssystems benötigt wird und für die dann im ausgeregelten Zustand bzw. $\dot{\beta} = \dot{\varphi}_s$ bzw. $\beta = \varphi_s$ gilt.

Man gelangt so zu der Anordnung nach Fig. 1, bei der als Beispiel einer Drehfeldmaschine eine Asynchronmaschine 1 von einem Umrichter 2 mit einem Ständerstrom veränderlicher Amplitude und Phase bzw. Frequenz gesteuert wird.

Der Fluß einer Drehfeldmaschine ist proportional der zum Fluß $\underline{\Psi}$ (Betrag $\Psi$, Winkel $\varphi_s$ zur Ständerachse) parallelen Ständerstromkomponente $i_{\varphi 1}$ ("Magnetisierungsstrom") und kann daher z. B. durch einen Flußregler 3 aus der Regeldifferenz ($|\underline{\Psi}|^* - \Psi$) als entsprechende feldorientierte Steuerkomponente $i^*_{\varphi 1}$ des Ständerstromes vorgegeben werden. Die dazu senkrechte Ständerstromkomponente $i_{\varphi 2}$ ("Wirkstrom") ist bei konstantem Fluß proportional dem Drehmoment der Maschine und kann z. B. durch einen Regler 4 für die Drehzahl $\lambda$ als zweite feldorientierte Steuerkomponente $i^*_{\varphi 2}$ des Ständerstroms vorgegeben werden.

Damit nun der Umrichter 2 der Maschine tatsächlich den gewünschten Ständerstrom einprägt, ist es erforderlich, diesen feldorientiert vorgegebenen Steuervektor $\underline{i}^*_\varphi$ auf geeignete Weise in Stellgrößen für den ständerorientierten Ständerstrom umzurechnen. Im Beispiel der Fig. 1 ermittelt ein Vektoranalysator 6 zunächst den Betrag $i^*$, der durch Vergleich mit dem von einem Vektoranalysator 7 gebildeten Ist-Strombetrag i und über einem nachfolgenden Betragsregler 8 als Betragsstellgröße dem Umrichter-Steuersatz 5 eingegeben wird. Der Vektoranalysator 7 erhält dabei als Eingangsgröße den von einem 3/2-Wandler 9 an den Klemmen der Maschine abgegriffenen Ist-Ständerstromvektor $\underline{i}_s$.

Der Vektoranalysator 6 ermittelt ferner den in Richtung des Soll-Stromvektors $\underline{i}^*_\varphi$ zeigenden Einheitsvektor, der mittels des Funktionsbildners 6' in den feldorientierten Stromwinkel arc tan $(i^*_{\varphi 2}/i^*_{\varphi 1})$ umgerechnet wird. Durch Vergleich mit dem entsprechenden Winkel-Istwert, der von einem dem Vektoranalysator 7 nachgeschalteten Vektordreher 13 mit einem Funktionsbildner 14 an die Regelvergleichsstelle 10 gegeben wird, kann ein Winkelregler 11 daraus die Steuergröße für die ständerorientierte Stromfrequenz liefern, die dem entsprechenden Frequenzsteuereingang des Steuersatzes 5 zugeführt wird und dazu führt, daß der Maschine der Ständerstrom mit der durch arc tan $i^*_{\varphi 2}/i^*_{\varphi 1}$ feldorientiert vorgegebenen und auf die Ständerorientierung transformierten Phasenlage arc tan $i_{s2}/i_{s1} = \varphi_s +$ arc tan $i^*_{\varphi 2}/i^*_{\varphi 1}$ eingeprägt wird.

Dem Regler 11 kann dabei noch die Feldfrequenz $\dot{\varphi}_s$ aufgeschaltet werden, so daß der eingeprägte Stromwinkel automatisch mit dem Flußwinkel $\varphi_s = \int \dot{\varphi}_s dt$ moduliert wird und der Winkelregler 11 nur noch die Winkelabweichung arc tan $(i^*_{\varphi 2}/i^*_{\varphi 1})$ – arc tan $(i_{\varphi 2}/i_{\varphi 1})$ auszuregeln braucht.

Die Feldorientierung der Drehfeldmaschinensteuerung benötigt stets eine Information über den Flußwinkel $\varphi_s$, um von den feldorientierten Steuergrößen $i^*_{\varphi 1}$, $i^*_{\varphi 2}$ auf die ständerorientierten Stellgrößen des Umrichters (hier: Amplitude und Frequenz des Ständerstromes) überzugehen. In Fig. 1 wird diese Winkelinformation als Vektor $\underline{\varphi}_s$ für den Vektordreher 13 benötigt, dem ein Vektordreher 13' vorgeschaltet ist, um entsprechend der Winkeladdition $\varphi_s = \beta + \varphi_\beta$ den im $\beta$-Koordinatensystem ermittelten Flußwinkel $\varphi_\beta$ (Winkel zwischen der durch ständerorientierte Komponenten cos $\beta$, sin $\beta$ vorgegebenen Achse $\underline{\beta}$ und dem im $\beta$-orientierten Koordinatensystem ermittelten Flußvektor $\underline{\Psi}_\beta$) ins Ständer-Koordinatensystem umzurechnen. Der Ermittlung des tatsächlichen Flußbetrages $\Psi$, des entsprechenden Flußwinkels $\varphi_\beta$ bzw. $\varphi_s$ sowie der Flußfrequenz dient nun das erfindungsgemäße Verfahren.

Dabei ist zunächst ein EMK-Detektor 15 vorgesehen, der aus dem über einen 3/2-Wandler 16 an den Maschinenklemmen abgegriffenen ständerorientierten Spannungsvektor $\underline{u}_s$ an den Subtraktionsstellen 17 und 18 mittels der Parameter $r^s$ für den ohmschen Ständerwiderstand und $l^\sigma$ für die Streuinduktivität der Maschine durch Subtraktion der Vektoren

$$r^s \cdot \underline{i}_s \text{ und } l^\sigma \cdot \frac{d}{dt}\underline{i}_s$$

den ständerorientierten EMK-Vektor $\underline{e}_s$ bildet.

Der bereits erläuterte Vektoroszillator 20 liefert aus einer der Frequenz $\dot{\beta}$ eines rotierenden Koordinatensystems entsprechenden Eingangsgröße das den Drehwinkel $\beta$ des rotierenden Koordinatensystems gegenüber dem ständerfesten Koordinatensystem beschreibende Signal $\underline{\beta}$, das die ständerorientierten Komponenten der rotierenden Koordinatenachse und im abgeglichenen Zustand die Richtung der Flußachse angibt.

In der Integrationsstufe 21 wird nun der EMK-Vektor unter Berücksichtigung der rotatorischen Komponente $\underline{e}^R{}_\beta$ im rotierenden Koordinatensystem integriert. Hierzu transformiert zunächst ein Vektordreher 22 die ständerorientierten Komponenten von $\underline{e}_s$ mittels des Winkelsignals $\underline{\beta}$ in die entsprechenden EMK-Komponenten des Vektors $\underline{e}_\beta$ im rotierenden Koordinatensystem. Über das Additionsglied 23 werden diese transformierten Komponenten zwei Integratoren (die in Fig. 1 durch ein einziges Symbol 24 dargestellt sind) zur komponentenweisen Integration zugeführt. Die erwähnte rotatorische Komponente $\underline{e}^R{}_\beta$ wird dadurch gebildet, daß die letztlich als Komponenten $\Psi_{\beta 1}$ und $\Psi_{\beta 2}$ des Flusses erhaltenen Integratoren-Ausgangssignale komponentenweise mit der Frequenz $\beta$ multipliziert werden (Multiplizierer 25) und die beiden Komponenten entsprechend dem Bildungsgesetz der rotatorischen Komponente unter Berücksichtigung eines Vorzeichenwechsels in ihrer Zuordnung zu den Koordinatenachsen des rotierenden Koordinatensystems vertauscht werden. Diese Vertauschung entspricht letztlich einer Drehung um $\pi/2$ und ist daher in Fig. 1 als Vektordrehung (Vektordreher 26) dargestellt. Die vom Vektordreher 26 gebildete rotatorische Komponente wird sodann dem Additionsglied 23 aufgeschaltet.

Aus der von der Integrationsstufe 21 gebildeten Komponente $\Psi_{\beta 2} = \Psi \cdot \sin(\varphi_s - \beta)$ wird nun über einen PI-Regler 27 mit dem Sollwert $\Psi^*_{\beta 2} = 0$ die von den Multiplizierern 25 und dem Vektoroszillator 20 benötigte Frequenz $\beta$ gebildet. Der Regler 27 erzwingt dadurch, daß die auf $\underline{\beta}$ senkrechte Komponente $\Psi_{\beta 2}$ des Flusses $\underline{\Psi}_\beta$ schnell ausgeregelt wird. Also zeigen die Vektoren $\underline{\Psi}_s = (\Psi \cdot \cos\varphi_s, \Psi \cdot \sin\varphi_s)$ und $\underline{\beta} = (\cos\beta, \sin\beta)$ stationär in gleiche Richtung ($\beta = \varphi_s$) und für geringe dynamische Anforderungen an die Drehfeldmaschinenregelung kann als Flußwinkel $\varphi_s \approx \beta$ und als Flußbetrag $\Psi \approx \Psi_{\beta 1}$ gesetzt werden.

Anstelle des von $\Psi_{\beta 2}$ beaufschlagten Nachführreglers 27 kann aber auch der Nachführregler 30 verwendet werden, sofern zumindest der stationäre Zustand des Flusses auf andere Weise bekannt ist. Eingangs wurde z. B. bereits das "Strommodell" als Beispiel einer anderen Schaltung zur Ermittlung des Flusses erwähnt. Da ferner der durch die Baugruppen 15 und 21 ermittelte Flußvektor in die Steuerung der Maschine und daher in die Ausbildung des tatsächlichen Flusses eingreift, kann häufig auch aus in der Steuerung gebildeten Soll- und/oder Istwertes auf andere Weise errechnet werden, wie sich der stationäre Zustand der Drehfeldmaschine einstellt.

Daher kann in Fig. 1 ein Strommodell 31 oder auch irgendeine andere Einrichtung verwendet werden, die einen Führungsvektor $\underline{\Psi}^*_s$ bereitstellt, der durch einen Führungswinkel $\varphi^*_s$ und einen Führungsbetrag $\Psi^*$ (für den stationären Zustand mit $\varphi_s = \beta = \varphi^*_2$ also durch die feldorientierten Komponenten $\Psi^*_{\beta 1} = \Psi^*$, $\Psi^*_{\beta 2} = 0$) zumindest den stationären Zustand des Feldes mit hinreichender Genauigkeit wiedergibt. Ein Vektoranalysator 32 gestattet dabei, den Betrag $\Psi^*$ und das entsprechende Winkelsignal $\underline{\varphi}^*_s$ bereitzustellen. Aus den beiden Winkelsignalen $\underline{\varphi}^*_s$ und $\underline{\beta}$ liefert ein Winkeldifferenzbildner (z. B. Vektordreher 33) den entsprechenden Differenzwinkel $\varphi^*_s - \beta$ (bzw. $\sin(\varphi^*_s - \beta)$) als Eingangssignal für den Regler 30. Dieser Regler 30 kann nun ebenfalls die erforderliche Frequenz $\underline{\beta}$ für den Vektoroszillator 20 bereitstellen. Ein Umschalter 36 zeigt, daß nur eine der beiden Möglichkeiten zur $\beta$-Bestimmung erforderlich ist bzw. daß zwischen beiden Möglichkeiten umgeschaltet werden kann. Ein Kurzschlußschalter 37 sorgt dabei dafür, daß der Regler 30 außer Eingriff und auf Null gesetzt werden kann, wenn die Frequenz $\beta$ vom Nachführregler 27 vorgegeben wird.

In gleicher Weise ist auch für den Betrag $\Psi^*$ ein entsprechender Betragsregler 38 mit einem Kurzschlußschalter 39 zu seiner Inaktivierung vorgesehen. Dieser Betragregler sorgt letztlich dafür, daß der errechnete Flußvektor $\underline{\Psi}_\beta$ im stationären Fall mit dem feldorientiert durch $\Psi^*_{\beta 1} = \Psi^*$ und $\Psi^*_{\beta 2}$ gegebenen Führungsvektor $\underline{\Psi}^*_s$ zusammenfällt. Dieser Regler ist beim Ausführungsbeispiel nach Fig. 1 als Vektorregler (je ein Regler für jede Vektorkomponente) ausgebildet und liefert die Komponenten eines ersten Korrekturvektors $\underline{\Delta\Psi}^*$, der ebenfalls der Additionsstelle 23 aufgeschaltet ist.

Die in Fig. 1 gezeigte Stellung des Umschalters 36, bei der die Regler 30 und 38 außer Eingriff sind, ist vor allem für den umgeführten Betrieb vorgesehen, bei dem die Drehfeldmaschine mit hoher Drehzahl läuft und daher die induzierten Spannungen einen hohen, eine gute Rechengenauigkeit ermöglichenden Pegel aufweisen. Bei niedrigen Drehzahlen jedoch besteht die Gefahr, daß dieses Spannungsmodell mit erheblichen Rechenfehlern behaftet ist, die zu einer Verfälschung des Flusses im stationären Zustand führen. In diesem Fall kann durch Umlegen des Schalters 36 und Aktivieren der Regler 30 und 38 in den geführten Betrieb übergegangen werden, bei dem das Spannungsmodell vom Strommodell 31 oder einer anderen einen Führungsvektor $\underline{\Psi}^*_s$ liefernden Einrichtung geführt wird.

Im geführten Zustand werden stationäre Rechenfehler durch den Eingriff des Führungsvektors unterdrückt, die Dynamik des Spannungsmodells bleibt jedoch erhalten. Der Übergang vom geführten in den ungeführten Zustand kann in einem Schritt oder auch kontinuierlich durch alternierendes Öffnen und Schließen des Umschalters 36 erfolgen. Abweichend von Fig. 1 kann auch vorgesehen sein, da Spannungsmodell losgelöst von dem beschriebenen Eingriff in die Maschine zu benutzen, um den Fluß der Maschine für Überwachungs- und Justierungszwecke zu erfassen. So sind z. B. andere Verfahren bekannt, bei denen eine Ermittlung des Flusses aus Strom und Spannung nötig ist, um z. B. den Läuferwiderstand der Maschine aus dem Vergleich des vom Spannungsmodell ermittelten Flusses mit einem anderweitig ermittelten Fluß zu bestimmen.

Bei der Schaltung nach Fig. 1 benötigt der

EMK-Detektor den Vektor $l^{\sigma} \cdot \frac{d}{dt} i_s$

des Streuspannungsabfalles der Maschine. Da eine Differentiation des Stromes technisch nur unvollständig durchführbar ist, empfiehlt sich eine Schaltung nach Fig. 12 und 13 der deutschen Offenlegungsschrift 3 034 275, die hier in Fig. 2 wiedergegeben ist und als EMK-Vektor einen Vektor $\underline{e}_s$ der geglätteten EMK bildet, der durch die Glättungszeitkonstante t und die Laplace-Variable s gemäß

$$\overline{e}_s = \frac{1}{1+st}\left(\underline{u}_s - r^s \cdot \underline{i}_s - l^{\sigma}\frac{di_s}{dt}\right)$$

gegeben ist. Diese Schaltung enthält zwischen den Subtraktionsstellen 17 und 18 des EMK-Detektors 15 einen Integrator 50 (Fig. 2) mit der Integrationszeitkonstanten t, wobei der Subtraktionsstelle 18 anstelle des Streuspannungsabfalls-Vektors dessen Integral $l^{\sigma} \cdot \underline{i}_s$ zugeführt ist. Der Subtraktionsstelle 17 ist dabei zusätzlich der Ausgangsvektor des EMK-Detektors, also der geglättete EMK-Vektor $\overline{e}_s$ negativ aufgeschaltet.

Diese Glättung bewirkt aber bei dynamischen Vorgängen eine Phasenverschiebung. Diese Phasenverschiebung kann bei der nachfolgenden Integration, die in Fig. 2 für die ständerorientierten Komponenten des Vektors $\overline{e}_s$ durch einen zum geglätteten Fluß $\underline{\overline{\Psi}}_s$ führenden Integrator 51 mit der Integrationkonstanten T angedeutet ist, dadurch berücksichtigt werden kann, daß dem durch die Integration gebildeten Integral des geglätteten Vektors der mit der Glättungszeitkonstanten t (bzw. dem Quotienten t/T, Multiplizierer 52) multiplizierte geglättete EMKVektor $\overline{e}_s$ an einer Additionsstelle 53 aufgeschaltet wird. Dadurch wird phasenrichtig der ungeglättete Flußvektor $\underline{\Psi}_s$ gebildet.

Diese Integrationsschaltung 21' zur Integration des geglätteten EMK-Vektors unter gleichzeitiger Kompensation der Glättung läßt sich auch in das rotierende Koordinatensystem übertragen. Dies ist in Fig. 3 dargestellt, wo der Vektordreher 22 den geglätteten EMK-Vektor mittels des Winkelsignals $\underline{\beta}$ in das rotierende Koordinatensystem transformiert. Der Integrator 24 führt nun die komponentenweise Integration im rotierenden Koordinatensystem durch, wobei der Multiplizierer 25 den durch die Integration erhaltenen geglätteten Flußvektor $\underline{\overline{\Psi}}_\beta$ mit der Rotationsfrequenz $\dot{\beta}$ multipliziert und die in Fig. 1 durch den Vektordreher 26 dargestelle Drehung um 90° durch die Vorzeichenumkehr (Invertierer 54) und Vertauschung der Koordinatenzuordnung zwischen den Klemmen 55 und 56 realisiert ist. Die Aufschaltung der auf diese Weise gewonnenen rotatorischen Komponente am Additionsglied 23 führt somit dazu, daß der Integrator 24 den geglätteten Flußvektor $\underline{\overline{\Psi}}_\beta$ liefert. Die Kompensation der Glättung kann nun mittels Multiplizierer 52 und Additionsstelle 53 erfolgen.

Während im geführten Zustand des in Fig. 1 gezeigten Spannungsmodells durch die Nachführung auf den Führungsvektor $\underline{\Psi}^*_s$ die entsprechenden Nachführungsregler 30, 37 einen durch Integratortrift oder andere Rechenfehler hervorgerufenen Gleichanteil ausregeln, können jedoch bei inaktivierten Nachführreglern derartige Integratorfehler nicht immer selbsttätig korrigiert werden. Fig. 4 zeigt die Ortskurve des Flußvektors $\underline{\Psi}_s$ in ständerorientierten Koordinaten sowie den Verlauf der Komponenten $\Psi_{s1}$ und $\Psi_{s2}$, wobei durch die Integratortriften der Nullpunkt 0 der Ortskurve gegenüber dem Koordinatensprung $0_0$ um den als "Exzentrizität" oder "Gleichanteilsvektor" bezeichneten Vektor $\underline{\Delta}$ (ständerorientierte Komponenten $\Delta_{s1}$, $\Delta_{s2}$) im stationären Zustand verschoben ist.

In Weiterbildung der Erfindung wird nun vorgeschlagen, der Integration als modifizierten EMK-Vektor die Vektor-Summe des ins rotierende Koordinatensystem transformierten EMK-Vektors und eines Korrekturvektors $\underline{\delta\Psi}$ zu verwenden, wobei der Korrekturvektor $\underline{\delta\Psi}$ in einer besonders einfachen Ausführung im rotierenden Koordinatensystem parallel oder antiparallel zur rotierenden Koordinatenachse $\varphi_2$ (dies entspricht der Richtung des $\varepsilon = \pm\pi/2$ gedrehten Flußvektors $\Psi_s$) gegeben ist. Der Betrag des Vektors wird durch eine sogenannte "flüchtige" Größe des errechneten Vektors bestimmt, d.h. durch eine Größe, die bei stationärem, gleichförmigen Umlauf auf einer zentrischen Ortskurve zu Null wird, jedoch mit wachsender Exzentrizität anwächst. Eine derartige Größe kann z. B. die Winkelbeschleunigung $\ddot{\varphi}_s = \frac{d}{dt}\dot{\varphi}_s$

sein, die oberhalb der mit $\overline{0}_0 - 0$ bezeichneten Geraden bei positivem Umlauf positiv und in der anderen Halbebene bei positivem Umlauf negativ wird. Eine bevorzugte andere flüchtige Größe ist durch die Ableitung $\dot{\Psi}$ des Flußbetrages gegeben, die bei positivem Umlauf in der Halbebene links oben negativ und in der anderen Halbebene positiv ist.

Fig. 5 und Fig. 6 zeigen nun bei einer exzentrischen, ständerorientierten Ortskurve des Flußvektors, wie durch die Vorgabe von $\varepsilon = \pm\pi/2$, d.h. durch Vorgabe des Vektors $\underline{\varepsilon} = (0, \pm 1)$ und der Betragskoordinate $\Delta = |\dot{\Psi}|$ der Korrekturvektor $\underline{\delta\Psi}$ gebildet wird. Wird das Vorzeichen jeweils entsprechend dem Vorzeichen von $-\dot{\Psi} \cdot \dot{\varphi}_s$ gewählt, so ergibt sich bei Fig. 5 der Korrekturvektor $\underline{\delta\Psi}$ im ständerorientierten bzw. feldorientierten Koordinatensystem durch die Komponenten

$$\delta\Psi_{\varphi 1} = -\dot{\Psi}\cos\varepsilon = 0,\ \delta\Psi_{\varphi 2} = -\dot{\Psi}\sin\varepsilon = -\dot{\Psi}$$

$$\delta\Psi_{s1} = -\dot{\Psi}\cos(\varepsilon + \varphi_s),\ \delta\Psi_{s2} = -\dot{\Psi}\sin(\varepsilon + \varphi_s).$$

Man erkennt in Fig. 5, daß bei dieser Vorgabe des Korrekturvektors sich die zum Gleichanteilsvektor senkrechte Komponente des Korrekturvektors bei einem Umlauf wegmittelt, jedoch der Korrekturvektor bei den verschiedenen, in Fig. 5 gezeigten Richtungen $\varphi_s$ des Flußvektors stets eine dem Gleichanteilsvektor $\underline{\Delta}$ entgegengesetzt gerichtete Komponente $\delta\Psi_\Delta$ besitzt. Fig. 6 zeigt die entsprechenden Verhältnisse für $\dot{\varphi}_s$ 0.

In vielen Fällen ist es allerdings vorteilhaft, den Winkel $\varepsilon$ zwischen dem Korrekturvektor $\underline{\delta\Psi}$ und der Flußachse $\underline{\varphi}_s \approx \underline{\beta}$ nicht konstant durch $\pi/2$ vorzugeben, sondern als Funktion von $\dot{\varphi}_s \approx \dot{\beta}$ und/oder einer anderen, den Betriebszustand der Drehfeldmaschine kennzeichnenden Zustandsgröße W vorzugeben. Außerdem kann es günstig sein, auch den Proportionalitätsfaktor zwischen der flüchtigen Größe (hier: $-\dot{\Psi}$) und dem Korrekturvektor-Betrag $|\underline{\delta\Psi}|$ funktionsabhängig vorzugeben. In feldorientierten $\underline{\varphi}_s$-Koordinaten (bzw. in den stationär damit zusammenfallenden, $\underline{\beta}$-orientierten $\beta$-Koordinaten) gelangt man damit zu dem Korrekturvektor

$$\underline{\delta\Psi} = -\dot{\Psi} \cdot \underline{\varepsilon}(\dot{\varphi},W) \text{ oder } \underline{\delta\Psi} = -\dot{\Psi} \cdot \varepsilon(\dot{\beta},W)$$

bei dem $\underline{\varepsilon}(\dot{\varphi},W)$ bzw. $\underline{\varepsilon}(\dot{\beta},W)$ eine Vektorfunktion ist, deren Ortskurve im $\varphi_s$- bzw. $\beta$-orientierten Koordinatensystem in Fig. 7 beispielhaft dargestellt ist.

Der Korrekturvektor $\underline{\delta\Psi}$ ist selbst ebenfalls "flüchtig", da er (entsprechend der flüchtigen Größe selbst) im stationären Zustand zu $\underline{\delta\Psi} = 0$ wird. Er bewirkt eine Dämpfung bei der Flußermittlung und über seinen Eingriff in die Maschinensteuerung wirkt er auch auf den Betrieb der Maschine selbst. Für dynamische Vorgänge, bei denen auch der Führungsvektor $\underline{\Psi}^*_s$ instationären Zuständen entsprechend veränderlich ist und also z. B. eine dynamische Führungsgröße $\dot{\Psi}^*$ aus dem Strommodell oder aus einer anderen Einrichtung zur Maschinensteuerung ermittelbar ist, kann diese Dämpfung unerwünscht sein und dadurch verringert werden, daß nicht direkt der aus der flüchtigen Größe $\dot{\Psi}$ des berechneten Flußvektors $\underline{\Psi}_s$ sich ergebende Korrekturvektor-Betrag benutzt wird, sondern die Differenz $\dot{\Psi} - \dot{\Psi}^*$. Ferner hat es sich gezeigt, daß für die beschriebene Dämpfung der dynamische Winkel $\varphi_\beta$ vernachlässigt und $\dot{\varphi}_s \approx \dot{\beta}$ gesetzt werden kann, wobei außerdem die flüchtige Größe $-\dot{\psi}$ nicht erst durch Differentiation am Ausgang der Integratorschaltung gebildet zu werden braucht, sondern in gute Näherung am Eingang der Integratorschaltung, insbesondere an der Klemme für die feldparallele EMK-Komponente, abgegriffen werden kann.

Zwischen dem Korrekturvektor $\underline{\delta\psi}$ und der Vektorfunktion $\underline{\varepsilon}(\dot{\varphi}_s,W)$ bzw. $\underline{\varepsilon}(\dot{\beta},W)$ besteht also dann eine Proportionalität mit dem Proportionalitätsfaktor $-\dot{\Psi}$ bzw. $-(\dot{\Psi} - \dot{\Psi}^*)$, $-(\varepsilon_{\beta 1} - \dot{\Psi}^*)$, $-(\varepsilon_{\varphi 1} - \dot{\Psi}^*)$ oder einer ähnlichen Größe. Die Vektorfunktion $\varepsilon(\varphi_s,W)$ kann dabei über die Variable W (z. B. den Winkel zwischen Spannung und Strom der Maschine) zu einer gezielten Dämpfung bestimmter dynamischer Betriebszustände der Maschine eingesetzt werden. Dabei wird $\underline{\varepsilon}(\dot{\varphi}_s,W)$ bzw. $\underline{\varepsilon}(\dot{\beta},W)$ bevorzugt als ein Steuervektor im rotierenden Koordinatensystem vorgegeben, dessen von $\varphi_s$ abhängige Ortskurve in Fig. 7 beispielhaft angegeben ist. Die beiden Äste dieser Ortskurve entsprechen dabei motorischem bzw. generatorischem Betrieb.

Man erkennt, daß für höhere Frequenzen der Winkel $\varepsilon$ nahe bei 90° liegt und erst bei Frequenzen in Nähe des Stillstandes die $\varphi 1$-Komponente gegenüber der $\varphi 2$-Komponente überwiegt. Der Stillstand selbst ($\dot{\varphi}_s = 0$) ist dabei ein singulärer Zustand, bei dem die Umlaufgeschwindigkeit des Koordinatensystems gegen Null geht. Bei einem derartigen singulären Zustand wird der Korrekturvektor vorteilhaft außer Eingriff gebracht. Die zum Flußvektor senkrechte Komponente des Korrekturvektors wird also bei dieser Vorgabe des Steuervektors $\underline{\varepsilon}$ nur dann Null, wenn gleichzeitig auch der Korrekturvektor $\underline{\delta\Psi}$ selbst entsprechend dem Betrag der flüchtigen Größe zu Null wird.

Fig. 8 zeigt wiederum am Beispiel einer umrichtergespeisten, feldorientierten Asynchronmaschine, wie diese Maßnahmen zur Glättung des EMK-Vektors und zur Bedämpfung nun in die Maschinensteuerung eingebaut werden können.

Für die feldorientierte Regelung oder Steuerung der Asynchronmaschine 1 über den Umrichter 2 ist lediglich die Eingabe des feldorientierten Steuervektors $\underline{i}^*_\varphi$ angegeben, und die verschiedenen Möglichkeiten und erforderlichen Transformationselemente, um aus diesen feldorientierten Steuergrößen, $i^*_{\varphi 1}$, $i^*_{\varphi 2}$ die benötigten Stellgrößen für den Umrichter 2 zu bilden, sind durch den Vektordreher 60 lediglich symbolisch dargestellt. Der Flußwinkel $\varphi_s$ wird dabei mittels eines Vektoranalysators 70 und eines Vektordrehers 71 gebildet, entsprechend der Winkeladdition des Winkels $\varphi_\beta$ zwischen errechnete Feldachse und der Koordinatenachse $\underline{\beta}$ und des Winkels $\beta$ zwischen den Achsen $\underline{\beta}$ und s1.

Dem 3/2-Wandler 16 zur Bildung des Ständerspannungsvektors $\underline{u}_s$ kann vorteilhaft eine Gleichanteilsregelung nachgeschaltet werden, die in einer Rückführungsschleife die Komponenten des Ständerspannungsvektors über eine integrierende Stufe 61 mit großer Integrationszeit führt, deren Ausgangssignale somit dem Gleichanteil in den Komponenten des Spannungsvektors entsprechen und als entsprechender Korrekturvektor an einer Subtraktionsstelle 62 dem Spannungsvektor $\underline{u}_s$ aufgeschaltet werden.

Mit 63 ist der in Fig. 2 gezeigte EMK-Detektor zur Bildung des Vektors $\underline{\bar{e}}_s$ der geglätteten EMK bezeichnet. Nach Transformation (Vektordreher 22) ins rotierende Koordinatensystem, das durch dem Feldwinkel $\underline{\varphi}_s$ folgende Nachführung des Winkels $\beta$ feldorientiert wird, führt eine entsprechend Fig. 3 ausgebildete Integrationsschaltung 64 unter Berücksichtigung der rotatorischen Komponente die Integration durch.

Dem Additionsglied 23 ist dabei der Korrekturvektor $\underline{\delta\Psi}$ aufgeschaltet, der von einem Korrekturvektorbildner geliefert ist. Der Korrekturvektorbildner enthält als richtungsbildende Mittel einen Steuervektorbildner 65, der entsprechend Fig. 7 den Steuervektor $\underline{\varepsilon}(\dot{\beta},W)$ als Funktion der Umlaufgeschwindigkeit $\dot{\beta}$ liefert, wobei durch den Eingang für die Zustandsgröße W angedeutet ist, daß der Steuervektor auch in funktionaler Abhängigkeit von einer Zustandsgröße W der Drehfeldmaschine vorgegeben werden kann. Durch komponentenweise Multiplikation an Multiplizierern 66, die als betragsbildende Mittel den

Betrag des Steuervektors $\underline{\varepsilon}$ entsprechend der den Betrag bestimmenden Größe $\Psi = e_{\beta 2}$ bzw. $\Psi - \Psi^*$ modifizieren, wird aus dem Steuervektor der Korrekturvektor $\underline{\delta\Psi}$ gebildet. Durch gestrichelte Linien sind dabei verschiedene Möglichkeiten angedeutet, den Faktor der Multiplikatoren 66 einzugeben.

Die weiteren in Fig. 8 gezeigten Mittel, die der Nachführung des rotierenden Koordinatensystems entsprechend der Nullpunktabweichung der ermittelten feldsenkrechten Flußkomponente $\psi_{\beta 2}$ oder der Regelabweichung $\varphi^*_s - \beta$ der Winkelkoordinate $\varphi_s \approx \beta$ von Führungswinkel $\varphi^*_s$ dienen, sind aus Fig. 1 übernommen und tragen die gleichen Bezugszeichen.

Die Regler 27, 30 und 38 sowie die Integratoren 24 verarbeiten bei der Erfindung demnach nur noch Gleichgrössen und sind daher hinsichtlich ihrer Regelgeschwindigkeit und ihres Einflusses auf die Flußermittlung nicht mehr kritisch. Insgesamt ist dadurch ein Verfahren und eine Vorrichtung geschaffen, die selbst bei niedriger Verarbeitungsgeschwindigkeit der verwendeten Bauglieder keine störenden Fehler, insbesondere keine Phasenverschiebungen bei der Ermittlung der Flußrichtung, erzeugen.

**Patentansprüche**

1. Verfahren zum Bestimmen des Flußvektors ($\psi_\beta$) einer Drehfeldmaschine, mit folgenden Schritten:

a) Aus Strom ($\underline{i}_s$) und Spannung ($\underline{u}_s$) wird der EMK-Vektor ($\underline{e}_s$) der Maschine (1) gebildet,

b) der EMK-Vektors wird mit einem aus dem Flußvektor abgeleiteten Rückführungssignal ($\beta b = \dot{\varphi}_s$) modifiziert und

c) durch Integration des modifizierten EMK-Vektors ($\underline{e}_\beta$) wird der Flußvektor gebildet,

*gekennzeichnet durch* folgende weitere Maßnahmen:

d) als modifizierter EMK-Vektor ($e_\beta$) wird der EMK-Vektor in einem aus dem Rückführungssignal ($\beta$) abgeleiteten Koordinatensystem gebildet, dessen eine Achse bezüglich des Ständerbezugssystems rotiert (Vektordreher 22),

e) der modifizierte EMK-Vektor wird unter Berücksichtigung der rotatorischen EMK-Komponente ($e^R{}_\beta$) im rotierenden Bezugssystem integriert und

f) das Rückführungssignal ($\beta$) wird aus dem Flußvektor so gebildet, daß die Frequenz des Koordinatensystems der Bewegung des Flußvektors ($\Psi_\beta$) nachgeführt (Regler 27, sin ($\varphi_s - \beta$) $\rightarrow$ 0) wird (Fig. 1).

2. Verfahren nach Anspruch 1, *dadurch gekennzeichnet*, daß die Frequenz ($\beta$) des Koordinatensystems dadurch bestimmt wird, daß die Richtungsabweichung ($\Psi_{\beta 2} = \Psi$: sin ($\varphi_s - \beta$)) des Flußvektors gegenüber einer Achse des rotierenden Koordinatensystems erfaßt und ausgeregelt (Nachführregler 27) wird (Fig. 1).

3. Verfahren nach Anspruch 1, *dadurch gekennzeichnet*, daß die Frequenz des Koordinatensystems dadurch bestimmt wird, daß die Richtungsabweichung (sin ($\varphi^*_s - \beta$)) einer Koordinatenachse gegenüber der Richtung ($\varphi^*_s$) eines Führungsvektors für den Fluß der Maschine erfaßt (Vektordreher 33) und ausgeregelt (Nachführregler 37, sin ($\varphi^*_s - \beta$) $\rightarrow$ 0) wird (Fig. 1).

4. Verfahren nach Anspruch 3, *dadurch gekennzeichnet*, daß durch Ausregeln (Nachführregler 38) der Differenz des ermittelten Flußvektors und des Führungsvektors ein Korrekturvektor ($\underline{\Delta\psi}^*$) ermittelt wird, der zum EMK-Vektor addiert (Additionsstelle 23) wird (Fig. 1).

5. Verfahren nach einem der Ansprüche bis 4, *dadurch gekennzeichnet*, daß als modifizierter EMK-Vektor ($\underline{e}_\beta$) der Vektor der mit einer Glättungszeitkonstanten (t) geglätteten EMK im rotierenden Koordinatensystem gebildet wird und daß als Flußvektor ($\underline{\Psi}_\beta$) der Summenvektor (Additionsglied 53) aus dem integrierten modifizierten EMK-Vektor und dem mit der Glättungszeitkonstanten multiplizierten modifizierten EMK-Vektor bestimmt wird (Fig. 8).

6. Verfahren nach einem der Ansprüche 1 bis 5, *dadurch gekennzeichnet*, daß dem EMK-Vektor ein anderer Korrekturvektor ($\underline{\delta\Psi}$) aufgeschaltet ist, der gegenüber dem Flußvektor ($\underline{\Psi}_\beta$) gedreht und dessen Betrag proportional einer flüchtigen Größe ($\Psi - \Psi^*$) des Flußvektors ist (Fig. 8).

7. Verfahren nach Anspruch 6, *dadurch gekennzeichnet*, daß der andere Korrekturvektor ($\underline{\delta\Psi}$) als Funktion der Rotationsgeschwindigkeit ($\beta$) des Koordinatensystems, vorzugsweise als Funktion der Rotationsgeschwindigkeit ($\beta$) und einer Zustandsgröße (W) der Maschine, bestimmt ist (Fig. 8).

8. Anwendung des Verfahrens nach einem der Ansprüche 1 – 7 beim Betrieb einer umrichtergespeisten Drehfeldmaschine, deren feldparallele und feldsenkrechte Komponenten in Abhängigkeit von feldorientierten Steuergrößen unabhängig veränderlich sind, wobei die Steuergrößen des Umrichters aus den feldorientierten Steuergrößen unter Verwendung der Richtung des bestimmten Flußvektors ermittelt werden.

9. Vorrichtung zum Bestimmten des Flußvektors ($\Psi_\beta$) einer Drehfeldmaschine, mit

a) einem EMK-Detektor (15) zur Ermittlung des EMK-Vektors ($\underline{e}_s$) der Maschine,

b) einer dem EMK-Detektor nachgeschalteten Rechenstufe (20, 22) zur Bildung

eines mittels eines Rückführungssignals (β) modifizierten EMK-Vektors ($\underline{e}_\beta$) und

c) einer Integrationsstufe (21) zur Bildung des Flußvektors als Integral des modifizierten EMK-Vektors,

*dadurch gekennzeichnet*, daß

d) die Rechenstufe das Rückführungssignal (β) verarbeitende Mittel (20) zum Festlegen eines gegenüber den ständerorientierten Koordinatensystem gedrehten rotierenden Koordinatensystems und eine Transformationseinrichtung (22) zur Bildung der Komponenten des modifizierten EMK-Vektors im rotierenden Koordinatensystem enthält,

e) in der Integrationsstufe (21) Integratoren (24) für die Komponenten des von einem ersten Additionsglied (23) gebildeten Summenvektors aus dem modifizierten EMK-Vektor und einem aus dem integrierten Summenvektor durch Drehung um π/2 (Vektordreher 26) und Multiplikation mit der Rotationsfrequenz des Koordinatensystems (Multiplizierer 25) ableitbaren rotatorischen Vektors ($\underline{e}^R{}_\beta$) vorgesehen sind und der Flußvektor am Ausgang der Integratoren (24) abgegriffen ist, und

f) eine die Richtungsabweichung ( bzw. $\varphi^*_s - \beta$) des Flußvektors von der Koordinatenachse kennzeichnende Größe einem Winkelregler (27 bzw. 30) zugeführt ist, dessen Ausgangssignal (β) als Rückführungssignal die Rotationsfrequenz des Koordinatensystems bestimmt (Fig. 1).

10. Vorrichtung nach Anspruch 9, *dadurch gekennzeichnet*, daß der EMK-Detektor (63) ein erstes Subtraktionsglied (17) für den Spannungsvektor ($\underline{u}_s$) enthält, dessen Subtrahendeneingang das Produkt aus Ständerstromvektor ($\underline{i}_s$) und einem Parameter ($r^s$) des Ständerwiderstandes sowie der Ausgangsvektor ($\overline{e_s}$) eines zweiten Subtraktionsgliedes (18) zugeführt sind, daß der Ausgangsvektor des ersten Subtraktionsgliedes über Integratoren (50) dem zweiten Subtraktionsglied (18) aufgeschaltet ist, dessen Substrahendeneingang das Produkt aus dem Ständerstromvektor ($\underline{i}_s$) und dem Parameter ($l^\sigma$) der Streuinduktivität der Maschine zugeführt ist, daß als Transformationseinrichtung zur Bildung des EMK-Vektors im rotierenden Koordinatensystem ein Vektordreher (22) verwendet ist, und daß am Ausgang der Integrationsstufe (64) ein weiteres Additionsglied (53) vorgesehen ist, dem der integrierte Ausgangsvektor des ersten Additionsgliedes (23) und der Ausgangsvektor des Vektordrehers (22) aufgeschaltet ist (Fig. 8).

11. Vorrichtung nach Anspruch 9 oder 10, *dadurch gekennzeichnet*, daß dem ersten Additionsglied (23) der Ausgangsvektor (δΨ) eines Korrekturvektorbildners (65, 66) aufgeschaltet ist, und daß der Korrekturbildner einen vom Rückführungssignal ($\beta \approx \dot{\varphi}_s$) beaufschlagten Funktionsbildner (65) zur Bildung eines Steuervektors ($\underline{\varepsilon}(\beta, W)$) und einen Betragsmodifikator (66) enthält, der durch Multiplikation des Steuervektors ($\underline{\varepsilon}(\beta, W)$) mit einer flüchtigen Größe ($\Psi - \Psi^*$) des Flußvektors den Korrekturvektor ($\underline{\delta\Psi}$) bildet (Fig. 8).

## Revendications

1. Procédé pour déterminer le vecteur du flux ($\psi_\beta$) d'une machine à champ tournant, incluant les étapes suivantes:

a) à partir du courant ($\underline{i}_s$) et de la tension ($\underline{u}_s$), on forme le vecteur de la force électromotrice ($\underline{e}_s$) de la machine (1),

b) on modifie le vecteur de la force électromotrice au moyen d'un signal de réaction ($\beta = \dot{\varphi}_s$) dérivé du vecteur du flux, et

c) on forme le vecteur du flux par intégration du vecteur de la force électromotrice modifié ($\underline{e}_\beta$),

caractérisé par les dispositions supplémentaires suivantes:

d) comme vecteur de la force électromotrice modifiée ($\underline{e}_\beta$), on forme le vecteur de la force électromotrice dans un système de coordonnées dérivé du signal de réaction (β), dont un axe tourne par rapport au système de référence rapporté au stator (dispositif de rotation vectorielle 22),

e) on intègre le vecteur de la force électromotrice modifié, en tenant compte de la composante rotative ($\underline{e}^R{}_\beta$) de la force électromotrice dans le système de référence rotatif, et

f) on forme le signal de réaction (β) à partir du vecteur du flux de manière que la fréquence du système de coordonnées soit asservie au déplacement du vecteur du flux ($\underline{\Psi_\beta}$) (régulateur 27, sin ($\Psi_s - \beta$) → 0) (figure 1).

2. Procédé suivant la revendication 1, caractérisé par le fait qu'on détermine la fréquence (β) du système de coordonnées en détectant l'écart de direction ($\Psi_\beta = \Psi \sin(\varphi_s - \beta)$) du vecteur du flux par rapport à un axe du système de coordonnées rotatif et on élimine cet écart (régulateur d'asservissement 27) (figure 1).

3. Procédé suivant la revendication 1, caractérisé en ce qu'on détermine la fréquence du système de coordonnées en détectant l'écart de direction ($\sin(\varphi^*_s - \beta)$) d'un axe de coordonnées par rapport à la direction ($\varphi^*_s$) d'un vecteur pilote pour le flux de la machine (dispositif de rotation vectorielle 33) et qu'on l'élimine (régulateur d'asservissement 37, $\sin(\varphi^* - \beta) \rightarrow 0$) (figure 1).

4. Procédé suivant la revendication 3, caractérisé par le fait qu'on détermine, en supprimant par réglage (régulateur d'asservissement 38) la différence entre le vecteur du flux déterminé et le vecteur pilote, un vecteur de correction ($\Delta\psi^*$), que l'on ajoute au vecteur de la force électromotrice (circuit additionneur 23) (figure 1).

5. Procédé suivant l'une des revendications 1 à 4, caractérisé par le fait qu'on forme, comme vecteur de la force électromotrice modifiée ($\underline{e}_\beta$), le vecteur de la force électromotrice, lissée par une constante de temps de lissage (t), dans le système de coordonnées rotatif et qu'on détermine, comme vecteur du flux ($\underline{\Psi}_\beta$) le vecteur somme (circuit d'addition 53) à partir du vecteur de la force électromotrice modifié intégré et du vecteur de la force électromotrice modifié, multiplié par la constante de temps de lissage (figure 8).

6. Procédé suivant l'une des revendications 1 à 5, caractérisé par le fait qu'on ajoute au vecteur de la force électromotrice un autre vecteur de correction ($\underline{\delta\Psi}$), qui est pivoté par rapport au vecteur du flux ($\Psi_\beta$) et dont la valeur est proportionnelle à une grandeur transitoire ($\Psi - \Psi^*$) du vecteur du flux (figure 8).

7. Procédé suivant la revendication 6, caractérisé par le fait qu'on détermine l'autre vecteur de correction ($\underline{\delta\Psi}$) en fonction de la vitesse de rotation ($\beta$) du système de coordonnées, de préférence sous la forme d'une fonction de la vitesse de rotation ($\beta$) et d'une grandeur d'état (W) de la machine (figure 8).

8. Application du procédé suivant l'une des revendications 1 – 7 au fonctionnement d'une machine à champ tournant, qui est alimentée par un convertisseur statique et dont les composantes parallèle et perpendiculaire au champ sont variables d'une manière indépendante, en fonction de grandeurs de commande liées au champ, les grandeurs de commande du convertisseur statique étant déterminée à partir des grandeurs de commande, liées au champ, moyennant l'utilisation de la direction du vecteur déterminé du flux.

9. Dispositif pour déterminer le vecteur du flux ($\psi_\beta$) d'une machine à champ tournant, comportant

a) un détecteur (15) de la force électromotrice, servant à déterminer le vecteur de la force électromotrice ($\underline{e}_s$) de la machine,

b) un étage de calcul (20, 22) branché en aval du détecteur de la force électromotrice et servant à former un vecteur de la force électromotrice ($\underline{e}_\beta$) modifiée au moyen d'un signal de réaction ($\beta$), et

c) un étage intégrateur (21) servant à former le vecteur du flux sous la forme de l'intégrale du vecteur de la force électromotrice, modifié,



caractérisé par le fait que

d) l'étage de calcul contient des moyens (20) servant à traiter le signal de réaction ($\beta$) et à déterminer le système de coordonnées rotatif pivoté par rapport au système de coordonnées lié au stator, et un dispositif de transformation (22) servant à former les composantes du vecteur de la force électromotrice modifié dans le système de coordonnées rotatif,

e) dans l'étage intégrateur (21) il est prévu des intégrateurs (24) pour les composantes du vecteur somme formé par un premier circuit additionneur (23), à partir du vecteur de la force électromotrice modifié et d'un vecteur rotatif ($\underline{e}^R{}_\beta$) pouvant être dérivé à partir du vecteur somme intégré par rotation de $\pi/2$ (dispositif de rotation vectorielle 26) et multiplication par la fréquence de rotation du système de coordonnées (multiplicateur 25), et le vecteur du flux est prélevé à la sortie des intégrateurs (24), et

f) une grandeur, qui caractérise l'écart de direction ($\varphi_s - \beta$ ou $\varphi^*{}_s - \beta$) du vecteur du flux par rapport à l'axe de coordonnées, est envoyé à un régulateur angulaire (27 ou 30), dont le signal de sortie ($\beta$) détermine, en tant que signal de réaction, la fréquence de rotation du système de coordonnées (figure 1).

10. Dispositif suivant la revendication 9, caractérisé par le fait que le détecteur (63) de la force électromotrice contient un premier circuit soustracteur (17) pour le vecteur de la tension ($\underline{u}_s$), à l'entrée du minuende duquel sont envoyés le produit d'un vecteur du courant statorique ($i_s$) et d'un paramètre ($r^s$) de la résistance statorique ainsi que le vecteur de sortie ($\underline{e}_s$) d'un second circuit soustracteur (18), que le vecteur de sortie du premier circuit soustracteur est envoyé, par l'intermédiaire d'intégrateurs (50), au second circuit soustracteur (18), à l'entrée du minuende duquel est envoyé le produit du vecteur du courant statorique ($\underline{i}_s$) par le paramètre ($l^\sigma$) de l'inductance de fuite de la machine, qu'on utilise un dispositif de rotation vectorielle (22) en tant que dispositif de transformation servant à former le vecteur de la force électromotrice dans le système de coordonnées rotatif et qu'à la sortie du circuit d'intégration (64) il est prévu un autre circuit additionneur (53), auquel sont envoyés le vecteur de sortie intégré du premier circuit additionneur (23) et le vecteur de sortie du dispositif de rotation vectoriel (22) (figure 8).

11. Dispositif suivant la revendication 9 ou 10, caractérisé par le fait que le vecteur de sortie ($\delta$) d'un dispositif (65, 66) de formation du vecteur de correction est envoyé au premier circuit additionneur (23) et que le dispositif de formation du vecteur de correction contient un dispositif (65) de formation de fonctions, qui est chargé par le signal de réaction ($\beta \approx \dot{\varphi}_s$) et sert à former un vec-

teur de commande ($\underline{\varepsilon}(\beta,W)$), et un dispositif (66) de modification de la valeur, qui forme le vecteur de correction ($\underline{\delta\Psi}$) par multiplication du vecteur de commande ($\underline{\varepsilon}(\beta,W)$) par une grandeur transitoire ($\Psi - \Psi^*$) du vecteur du flux (figure 8).

**Claims**

1. Method for determining the flux vector ($\Psi_\beta$) of an induction machine, with the following steps:

a) from current ($\underline{i}_s$) and voltage ($\underline{u}_s$), the EMF-vector ($\underline{e}_s$) of the machine (1) is formed;
b) the EMF-vector is modified with a feed-back signal ($\beta = \dot{\varphi}_2$) derived from the flux vector; and
c) through integration of the modified EMF-vector ($\underline{e}_\beta$), the flux vector is formed;

characterised by the following further measures:

d) as modified EMF-vector ($\underline{e}_\beta$), the EMF-vector is formed in a coordinate system derived from the feedback signal ($\beta$), whose one axis rotates with reference to the stator reference system (vector rotator 22),
e) the modified EMF-vector is integrated, whilst taking into account the rotary EMF-component ($\underline{e}^R{}_\beta$), in the rotating reference system; and
f) the feed-back signal ($\beta$) is formed from the flux vector so that the frequency of the coordinate system follows the movement of the flux vector ($\underline{\Psi}_\beta$), (regulator 27, sin ($\varphi_s - \beta$) $\rightarrow$ 0), (Figure 1 ).

2. Method according to claim 1, characterised in that the frequency ($\beta$) of the coordinate system is determined in that the direction deviation ($\Psi_\beta = \Psi$ sin ($\varphi_s - \beta$) of the flux vector vis à vis an axis of the rotating coordinate system is detected and adjusted (follow-up regulator 27) (Figure 1).

3. Method according to claim 1, characterised in that the frequency of the coordinate system is determined in that the direction deviation (sin ($\varphi^*_s - \beta$)) of a coordinate axis vis à vis the direction ($\varphi^*_s$) of a command vector for the flux of the machine, is detected (vector rotator 33) and adjusted (follow-up regulator 37, sin ($\varphi^*_s - \beta$) $\rightarrow$ 0) (Figure 1).

4. Method according to claim 3, characterised in that through adjustment (follow-up regulator 38) of the difference of the determined flux vector and of the command vector, a correction vector ($\Delta\Psi^*$) is determined, which is added (addition point 23) to the EMF-vector (Figure 1).

5. Method according to any one of the claims 1 to 4, characterised in that as modified EMF-vector ($\underline{e}_s$) the vector of the EMF – smoothed with a smoothing time constant (t) – is formed in the rotating coordinate system and as flux vector ($\underline{\Psi}_\beta$) the sum vector (adder 53) is determined from the integrated modified EMF-vector and the modified EMF-vector multiplied with the smoothing time constant (Figure 8).

6. Method according to any one of the claims 1 to 5, characterised in that there is applied to the EMF-vector another correction vector ($\underline{\delta\Psi}$), which is turned vis à vis the flux vector ($\psi_\beta$) and whose magnitude is proportional to a transient variable ($\Psi - \Psi^*$) of the flux vector (Figure 8).

7. Method according to claim 6, characterised in that the other correction vector ($\underline{\delta\Psi}$) is determined as a function of the rotation speed ($\beta$) of the coordinate system, preferably as a function of the rotation speed ($\beta$) and a state variable (W) of the machine (Figure 8).

8. Application of the method according to one of the claims 1 – 7 to the operation of a converter-fed induction machine, whose field-parallel and field-perpendicular components are independently variable, in dependence on field-oriented control variables, in which case the control variables of the converter are determined from the field-oriented control variables, whilst using the direction of the determined flux vector.

9. Apparatus for determining the flux vector ($\Psi_\beta$) of an induction machine, comprising:

a) an EMF-detector (15) for determining the EMF-vector ($e_s$) of the machine;
b) a calculating stage (20, 22) connected downstream of the EMF detector for forming an EMF-vector ($e_\beta$) modified by means of a feed-back signal ($\beta$) and
c) an integration stage (21) for forming the flux vector as an integral of the modified EMF-vector;

characterised in that:

d) the calculating stage comprises means (20) for processing the feed-back signal ($\beta$) for fixing a rotating coordinate system turned vis à vis the stator-oriented coordinate system, and a transformation device (22) for forming the components of the modified EMF-vector in the rotating coordinate system;
e) the integration stage (21) comprises integrators (24) for the components of the sum vector formed by a first adder (23) from the modified EMF-vector and a rotary vector ($\underline{e}^R{}_\beta$) derivable from the integrated sum vector through turning by $\pi/2$ (vector rotator 26) and multiplication with the rotation frequency of the coordinate system (multiplier 25), and the flux vector is tapped at the output of the integrators (24) and,

f) a variable identifying the direction deviation or ($\varphi^*_s - \beta$) of the flux vector from the coordinate axis is supplied to an angle regulator (27 or 30) whose output signal ($\beta$) determines, as feed-back signal, the rotation frequency of the coordinate system (Figure 1).

10. Apparatus according to claim 9, characterised in that the EMF-detector (63) comprises a first subtractor (17) for the voltage vector ($\underline{u}_s$), to whose subtracting input the product of stator current vector ($\underline{i}_s$) and a parameter ($r^S$) of the stator resistance, as well as the output vector ($\underline{e}_s$) of a second subtractor (18), are supplied; in that the output vector of the first subtractor is applied via integrators (50) onto the second subtractor (18), to whose subtracting input the product of the stator current vector ($\underline{i}_s$) and the parameter ($l^\sigma$) of the leakage inductance of the machine is supplied; in that a vector rotator (22) is used as transformation device for forming the EMF-vector in the rotating coordinate system; and in that at the output of the integration stage (64) a further adder (53) is provided onto which the integrated output vector of the first adder (23) and the output vector of the vector rotator (22) are applied (Figure 8).

11. Apparatus according to claim 9 or 10, characterised in that the output vector ($\delta$) of a correction vector former (65, 66) is applied onto the first adder (23) and the correcting former contains a function former (65) acted upon by the feed-back signal ($\beta \approx \dot{\varphi}_s$) for forming a control vector ($\underline{\varepsilon}(\beta, W)$), and a magnitude modifier (66) which forms, through multiplication of the control vector ($\underline{\varepsilon}(\beta, W)$) with a transient variable ($\Psi - \Psi^*$) of the flux vector, the correction vector ($\underline{\delta\Psi}$) (Figure 8).

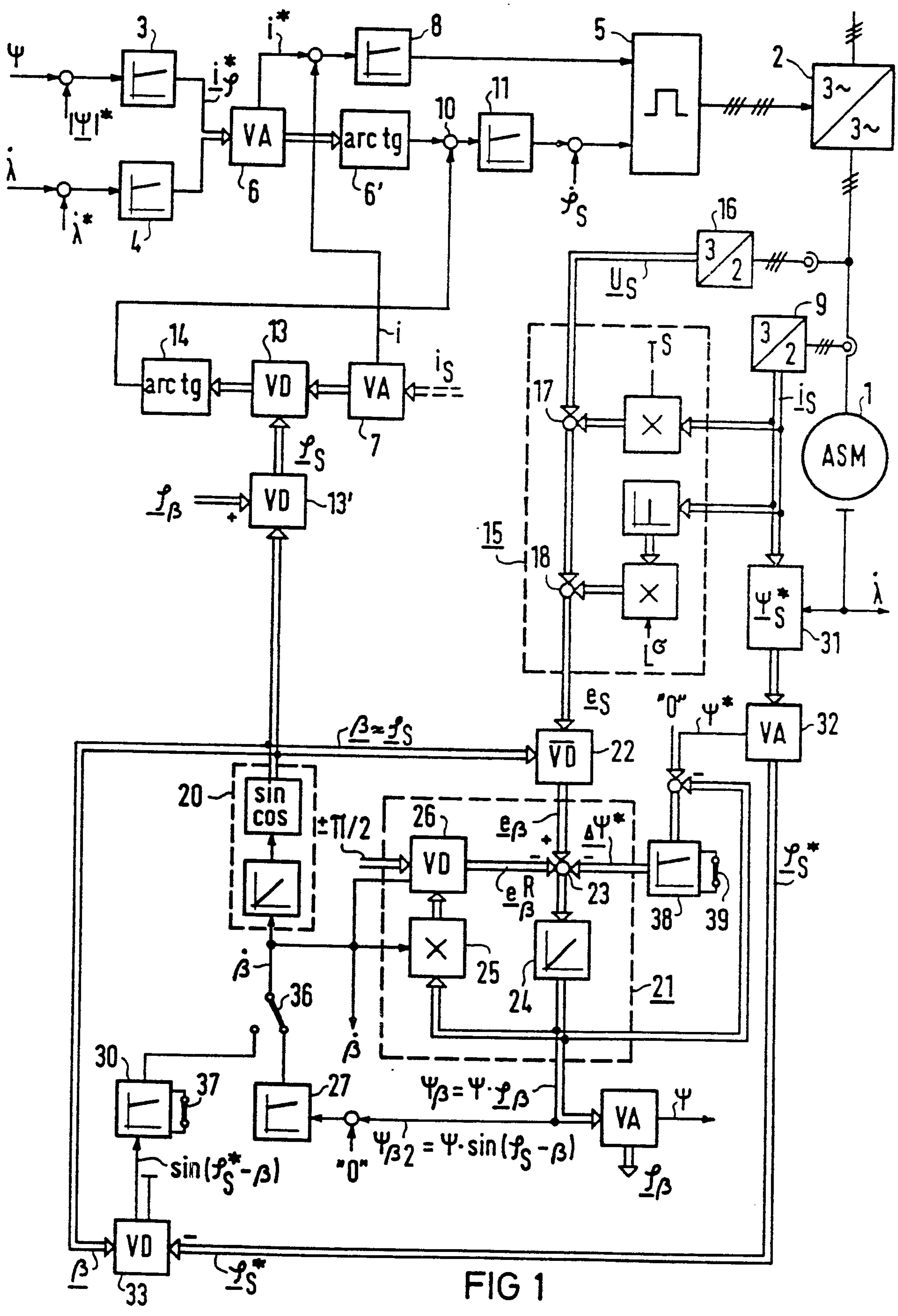

FIG 1

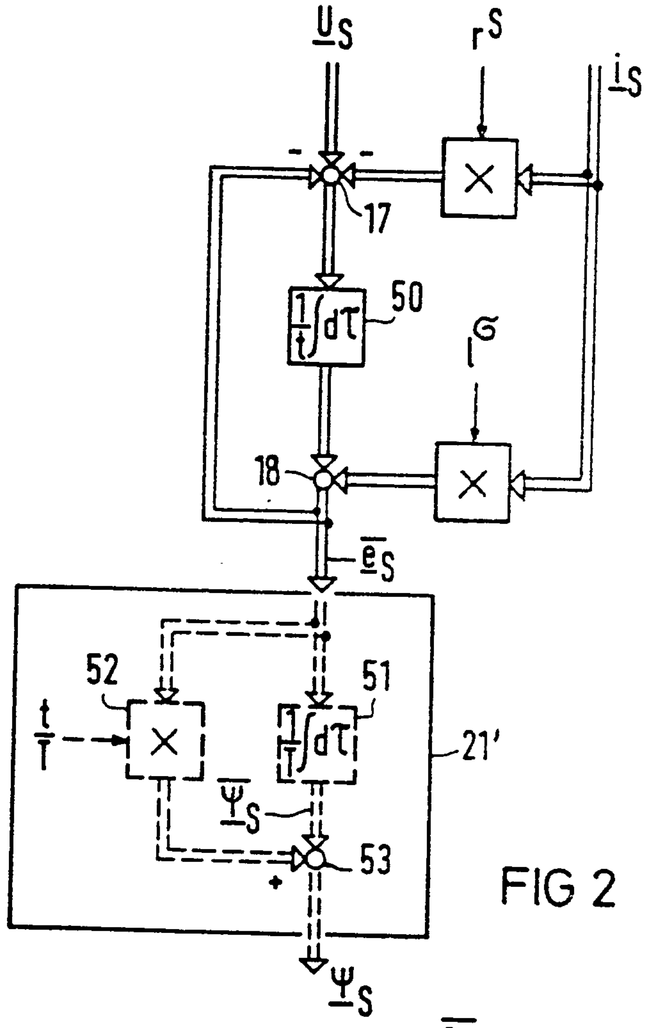


FIG 2

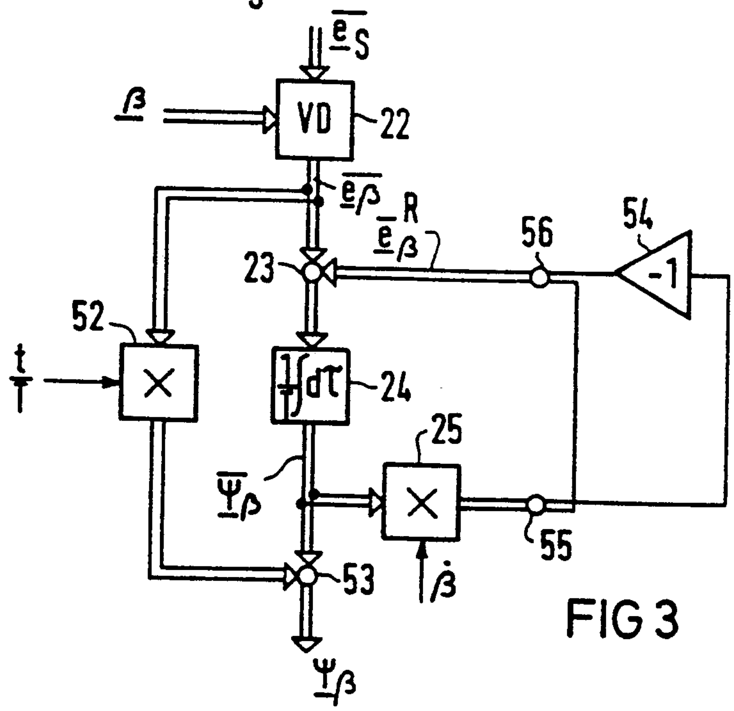


FIG 3

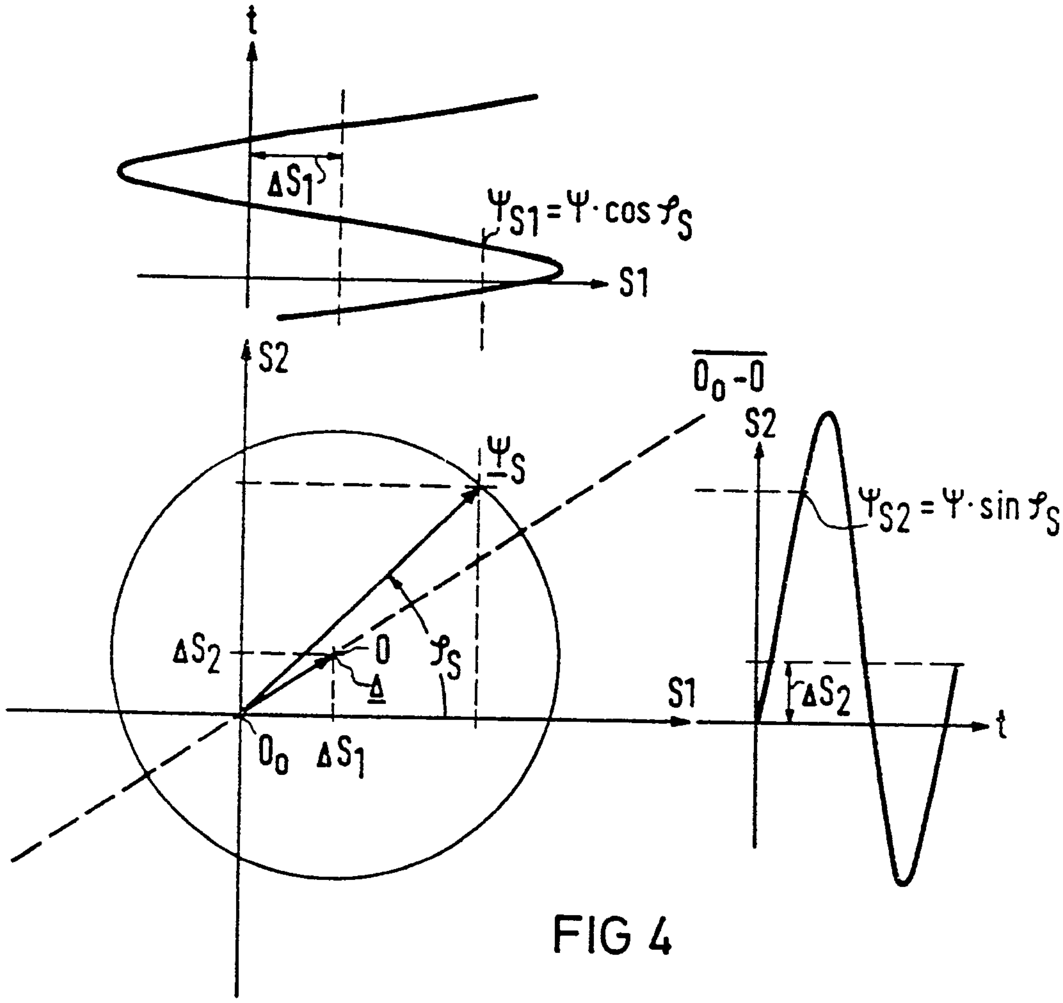
t
ΔS1
ΨS1 = Ψ · cos φS
S1
S2
O0 - O
S2
ΨS
ΨS2 = Ψ · sin φS
ΔS2
O
Δ
φS
S1
ΔS2
t
O0
ΔS1

FIG 4

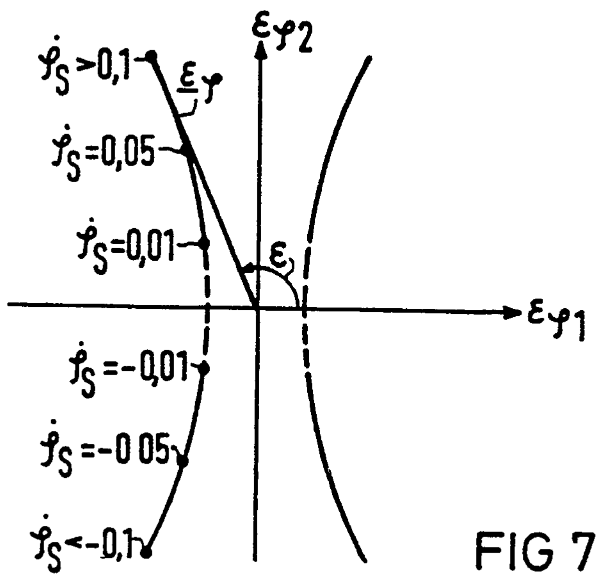
εφ2
φ̇S > 0,1
εφ
φ̇S = 0,05
φ̇S = 0,01
ε
εφ1
φ̇S = -0,01
φ̇S = -0 05
φ̇S < -0,1

FIG 7

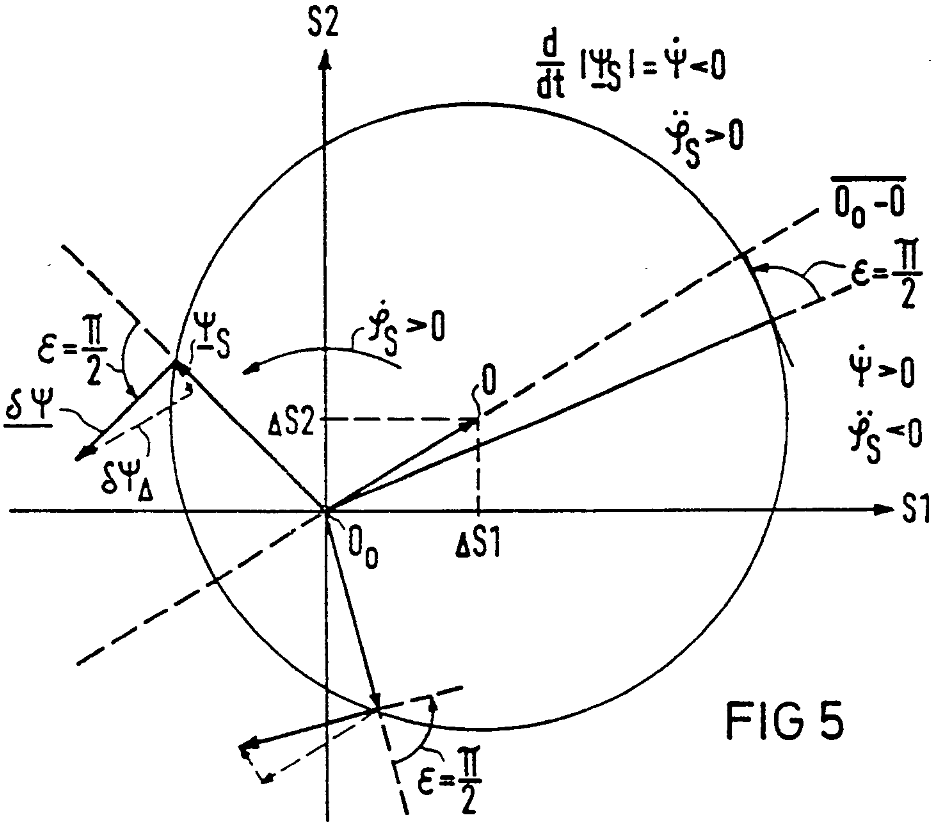
S2
d/dt |Ψ_S| = Ψ̇<0
φ̈_S>0
O_0-O
ε=π/2
Ψ_S
φ̇_S>0
ε=π/2
δΨ
O
ΔS2
Ψ̇>0
φ̈_S<0
δΨ_Δ
S1
O_0
ΔS1
ε=π/2

FIG 5

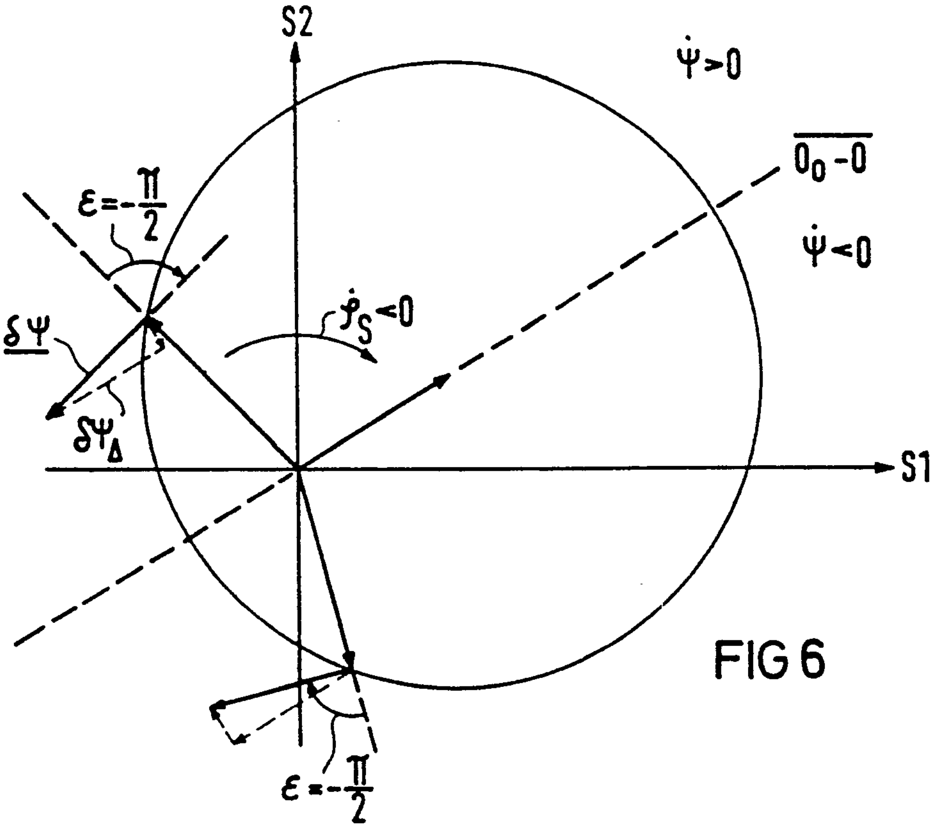
S2
Ψ̇>0
O_0-O
ε=-π/2
Ψ̇<0
δΨ
φ̇_S<0
δΨ_Δ
S1
ε=-π/2

FIG 6

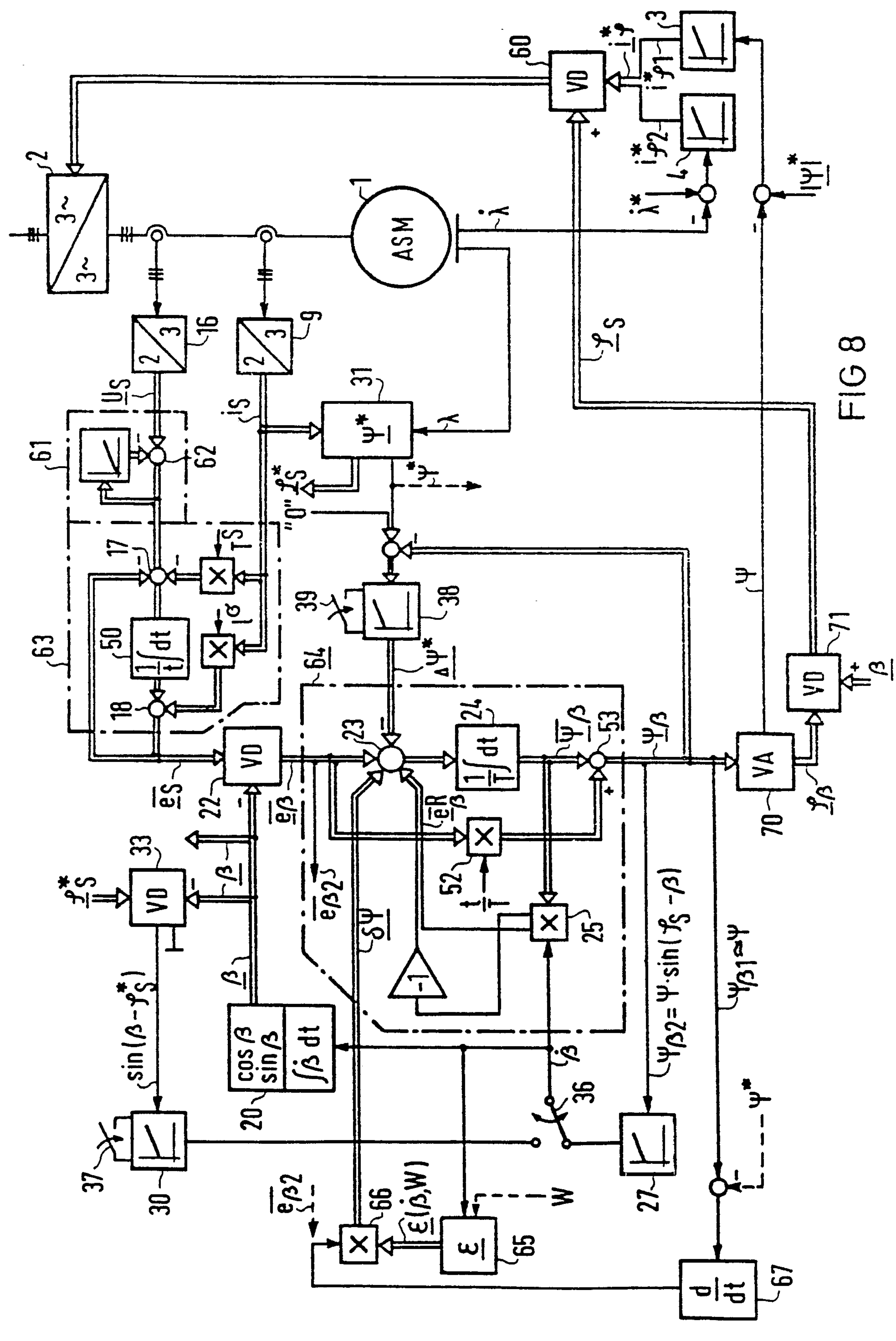

FIG 8